# EUROPEAN PATENT SPECIFICATION

(11) **EP 1 495 195 B1**
(45) Date of publication and mention of the grant of the patent: **19.11.2008**
(21) Application number: 02743640.1
(22) Date of filing: 07.06.2002
(51) Int. Cl.: E04F 15/02, B29D 31/00, B29C 67/24, B29B 7/76, F16K 31/122, F16K 11/10, F16K 1/38, F16K 41/04, B05B 7/04

(54) **Wall and/or floor tile and method for its production**
Wand- und/oder Bodenfliese sowie Verfahren zu ihrer Herstellung
Carreau pour mur et/ou sol et procédé de production correspondant

(43) Date of publication of application: 12.01.2005
(73) Proprietor: SICIS S.r.l., 48100 Ravenna (IT)
(72) Inventor: PLACUZZI, Maurizio c/o SICIS S.r.l., I-48100 Ravenna (IT)
(74) Representative: Vittorangeli, Lucia
(86) International application number: PCT/IT2002/000380
(87) International publication number: WO 2004/007866

(56) References cited:
- WO-A-02/31290
- WO-A-02/33198
- WO-A-97/24189
- AU-A- 3 863 472
- DE-A- 2 358 969
- DE-C- 339 382
- FR-A- 2 108 916
- FR-A- 2 784 929
- GB-A- 951 689
- US-A- 4 204 977
- US-A- 5 053 274
- US-A- 5 772 216
- US-A- 5 938 119
- US-A- 6 074 506
- US-A1- 2002 027 306

## Description

The present invention relates to a tile suitable for covering walls and/or floors, comprising a container element and a filling material disposed inside the container element.

In particular, the present invention relates to a tile comprising a visible container element and a filling material disposed inside the container element.

The present invention also relates to a method for producing the tile.

The filling material suitable for filling the tile of the present invention should, however, possess all of the following characteristics simultaneously:
a) it should be easily injectable, that is, it should have a setting time such as to remain in the fluid state throughout the injection period and to set only once the tile is completely filled, so as to avoid blockage of the injection system due to premature setting of the material inside it,
b) it should have a high degree of hardness, once formed inside the container element of the tile, thus enabling the tile to withstand stresses due to external loads such as, for example, those imparted by walking, for floor tiles,
c) it should be produced from easily-injectable components which can react with one another quickly once they are put in contact with one another, and which can form the filling material having the characteristics of points a) and b),
d) it should be non-toxic to avoid environmental problems,
e) it should have optimal adhesiveness in relation to the container element of the tile, that is, it should be capable of remaining firmly fixed to the container element without the aid of glue and without bending of the walls of the container element to prevent the filling material coming out,
f) it should be light to permit easy transportation, and
g) it should be inexpensive.

The problem underlying the present invention is therefore that of providing a filling material which simultaneously possesses all of the chemical-physical characteristics described above.

This problem is solved by a method of making a wall and/or floor tile comprising a container element and a filling material

WO02/33198A discloses a tile and the method of making said tile comprising a metallic container element and a filling material.

US 5,053,274 discloses mixtures of polyurethane and/or polyurea with a dry solid or liquid filler for use in load bearing products like tiles. disposed inside the container element in accordance with claim 1.

Further a tile in accordance with claim 6 is provided Additional embodiments of the invention are defined in the dependent claim.

Preferably, the filling material has a Shore D hardness of between 55 and 85 and a setting time, at ambient temperature, of between 5 and 15 minutes, even more preferably, the filling material has a Shore D hardness of 75 and a setting time, at ambient temperature, of 10 minutes. The setting time is calculated for a quantity of 1 g of material poured. The amount of material in fact affects the setting time; in general a larger quantity of material corresponds to a shorter settling time.

The polymeric filling material is that which is produced by reaction of two components, hereinafter referred to as two-component material.

Preferred examples of these two-component materials are polyurethane or polyurea.

The polyurethane is that which is produced by reaction of a polyol having a number of OH groups of between 80 and 500 mgKOH/g and a viscosity of between 200 and 200,000 cps, with an isocyanate having an NCO content of between 5 and 31%.

Advantageously, the polyurethane is that which is produced by reaction of a polyol having a number of OH groups of between 100 and 400 mgKOH/g, more preferably between 120 and 250 mgKOH/g, and a viscosity of between 2,000 and 10,000 cps, with an isocyanate having an NCO content of between 10 and 25%.

As a general guide, a person skilled in the art will appreciate that the number of OH groups in the polyol and the NCO content of the isocyanate will be regulated in a manner such that the two components react stoichiometrically.

Preferred examples of the polyols suitable for the present invention are polyols of the polyester and polyether types. Even more preferably, the polyols are polyether polyols.

Examples of these polyether polyols are those sold by The Dow Chemical Company under the name Voramer® MB 3102 (chemical type: polyether polyol initiated with glycerol), Voranol® CP 450 (chemical type: glycerol propoxylate polyether triol with an average molecular weight of 450) and Specfil® FC 252 (chemical type: dispersion of styrene-acrylonitrile in polyether polyol).

Preferred examples of isocyanates suitable for the present invention are aromatic isocyanates based on diphenylmethane-4,4'-diisocyanate (MDI) and toluene-2,4 (2,6) diisocyanate (TDI), and aliphatic isocyanates such as, for example, isophorone diisocyanate (IPDI) and hexamethylene diisocyanate (HDI).

Examples of these isocyanates are those sold by The Dow Chemical Company under the name Voramer® MB 3503 (chemical type: diphenylmethane-4,4'-diisocyanate (4,4' MDI)).

If the filling material of the present invention is a two-component polyurea material, it will be obtained by reaction of an amine having a number of OH groups of between 500 and 1000 mgKOH/g with an isocyanate having an NCO content of between 5 and 15%.

Advantageously, the polyurea is that produced by reaction of a amine having a number of NH₂ groups of between 600 and 800 mgKOH/g with an isocyanate having an NCO content of between 7 and 10%.

As a general guide, a person skilled in the art will appreciate that the number of OH groups in the amine and the NCO content of the isocyanate will be adjusted in a manner such that the two components react stoichiometrically.

Preferred examples of isocyanates suitable for preparing the polyurea are those described above for the preparation of polyurethane.

Preferred examples of amines suitable for preparing the polyurea are primary amines such as, for example DETA (diaminodiethyl toluene) and MOCA.

The above-mentioned polyols, isocyanates and amines are used as such and do not include any additives such as, for example, pigments, flame retardants, inert fillers, catalysts and dehydration agents.

The filling material of the present invention is preferably deposited in the container element by a system for injecting the components into the container element.

In detail, the injection method comprises the steps of:
a) introducing separately into an injector the components which are to form the filling material,
b) reacting the components of step a) only in the region of a mixer connected to the injector,
c) completely filling the container element with the mixture obtained in step b), and
d) causing the filling material to set in situ inside the container element.

The mixer of step b) is preferably a static mixing nozzle formed by a tube provided with internal obstacles for facilitating the contact of the components with one another.

The setting step d) is advantageously accelerated by conventional heating in an oven. Even more advantageously, the heating in an oven takes place at a temperature of between 100 and 150°C.

The tiles thus produced can be transported by the deposition of a glass-fibre fabric on the filling material.

The above-mentioned method is implemented by an apparatus comprising at least one supply head suitable for depositing, in the container element of the tile, the multi-component polymeric filling material, which is capable of setting after a predetermined period of time, upon mixing of the multiple components, at ambient temperature, the supply head comprising injector means provided with separate supply circuits for each of the multiple components, and the separate supply circuits converging in a single nozzle for mixing the multiple components, from which nozzle the filling material is supplied into the container element, in controlled manner, to form the wall and/or floor tile.

Further characteristics and advantages of the wall and/or floor tile and of the method used for filling the tile according to the present invention will become clearer from the description of some preferred embodiments, given below, by way of non-limiting example with reference to the appended drawings, in which:
Figure 1 is an axonometric view of the tile of the present invention, in which the filling material is visible,
Figure 2 is an inverted and partially cut-away axonometric view of the tile of Figure 1, in which the container element is visible,
Figure 3 is an overall schematic view showing a separate supply circuits of the apparatus
Figure 4 is a schematic view showing the supply head of the apparatus in section,
Figure 5 is a schematic view showing a detail of the supply head of Figure 4 in a section taken on the line 5-5 of Figure 4,
Figure 6 is a perspective view of the mixing nozzle and of its protective tube, which are associated with the injection chamber of Figure 4,
Figure 7 is a view of the output side of the apparatus,
Figure 8 is a view of the input side of the apparatus,
Figure 9 is a view of the particular pump-unit and reservoir assembly of the apparatus,
Figure 10 is a view of a detail of Figure 8, taken on the arrow X of Figure 8,
Figure 11 is a perspective view showing a detail of the apparatus from above, and
Figure 12 is a schematic view showing, in section, a further embodiment of the supply head of the apparatus.

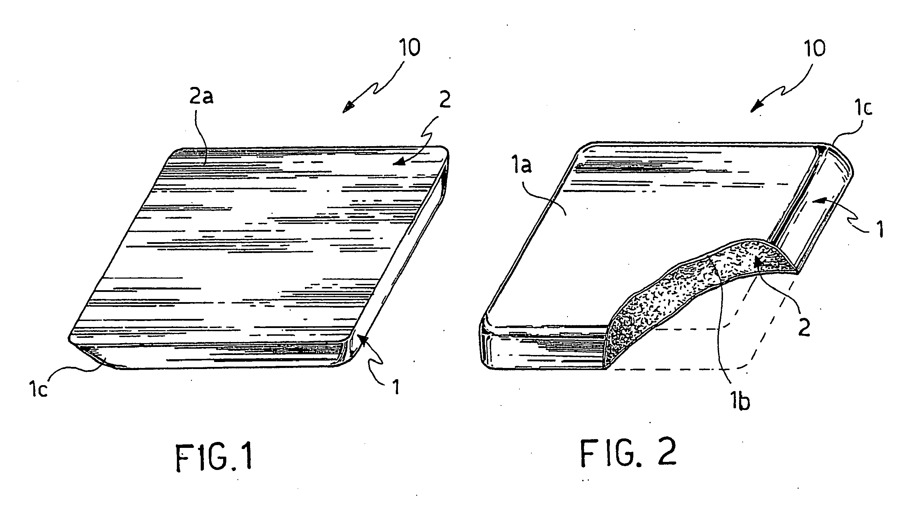

As shown in Figures 1 and 2, a wall and/or floor tile 10 according to the present invention comprises a container element 1 and a filling material 2 disposed inside the container element 1.

The container element 1 may have various shapes and sizes, for example, it is square with dimensions of 2 x 2 cm.

The container element 1 may also be made of various materials; it is preferably made of metal, even more preferably of stainless steel.

The container element 1 has an outer, visible surface 1a and an inner surface 1b which is to come into contact with the filling material 2.

The outer, visible surface 1a may be a smooth surface or may be treated by a printing process or an engraving process.

The inner surface 1b may remain smooth or may be treated to improve adhesion to the filling material 2.

Typical examples of these treatments are butter-finishing, for example, 80-grain butter-finishing, and pickling with solvents such as, for example, trichloroethylene or nitro solvents.

The container element 1 is preferably produced by conventional pressing techniques.

As shown in a preferred embodiment in Figures 1 and 2, the container element 1 has chamfered corners 1c and a filling material 2 which is capable of completely filling the container element to form a flat surface 2a therewith.

The tiles 10 of the present invention can easily be transported and deposited on the surface to be covered, by virtue of the deposition of a fabric, for example, a glass-fibre fabric, on the flat surfaces 2a of the filling materials 2 of a plurality of tiles 10 disposed adjacent one another.

Alternatively, the above-mentioned operations of transportation and deposition on the surface to be covered may easily be performed if a plurality of tiles 10 of the present invention are held together by a layer of the filling material 2.

The advantages of the wall and/or floor tile of the present invention are clear from the foregoing description.

One advantage is that the wall and/or floor tile of the present invention comprises a filling material having a Shore D hardness of at least 50. This enables the tile to withstand external loads without deformation of the container element, thus enabling the aesthetic shape of the latter to be maintained.

A further advantage is that the wall and/or floor tile of the present invention comprises a filling material having a setting time of more than 3 minutes, at ambient temperature. This allows the filling material to be in the fluid state throughout the time necessary to fill the container element completely and to be in the solid state only once it is *in situ*, that is, inside the container element. Moreover, this enables the container element to be filled by an injection system without the injection system being blocked because of premature setting of the material inside it.

A third advantage is that the wall and/or floor tile of the present invention comprises a filling material formed by easily injectable components which can react with one another rapidly (from about 3 to 10 seconds) once they are put in contact. Moreover, both the components and the filling material produced therefrom are non-toxic to the environment and do not require solvents for their reactivity.

An advantage is that the tile of the present invention is formed by a filling material which can adhere firmly to the container element without the need to interpose a layer of gluing material.

A further advantage is that the tile of the present invention is light and is made with inexpensive filling material.

An advantage is that the tile of the present invention is easy to produce.

Clearly, only a few embodiments of the wall and/or floor tile, of the method, and of the apparatus of the invention have been described and a person skilled in the art will be able to apply thereto all of the modifications necessary to adapt them to particular applications without, however, departing from the scope of protection of the present invention.

The following example serves to illustrate the present invention without, however, limiting it in any way.

### Example 1

### Preparation of filling material

Component A: 60 p/w of diphenylmethane-4,4'-diisocyanate sold by The Dow Chemical Company under the name of Voramer® Me 3053, having an NCO content of 21%, a viscosity at 25°C of less than 500 cSt, measured by the Cannon Fenske method, and a specific weight at 25°C of 1.19 g/ml.

Component B: 100 p/w of polyol of the glycerol propoxylate polyether triol type sold by The Dow Chemical Company under the name of Voramer® Me 3102, having a number of hydroxyl groups of 169 mgKOH/g, and a viscosity at 25°C of 3000 cps.

After being stirred, component A and component B were loaded into an injector of known type by a volumetric pump and were kept separated as far as the inlet to a mixing nozzle of a static mixer, formed by a tubular plastics body provided with internal obstacles for facilitating mixing of the components.

The mixing together of components A and B was thus performed at ambient temperature and only in the region of the mixing nozzle, for a period of time equal to the time necessary to pass through the entire tubular body of the mixer and to reach the tile to be filled (3 to 10 seconds).

The mixture obtained was set after 3 minutes by heating to 120°C in a conventional oven.

The polyurethane thus obtained showed the following characteristics:
Shore D hardness: 75-80 (measured by the ASTM D 2240 method), and
Density: 1.4 g/l (measured by the DIN 53420 method).

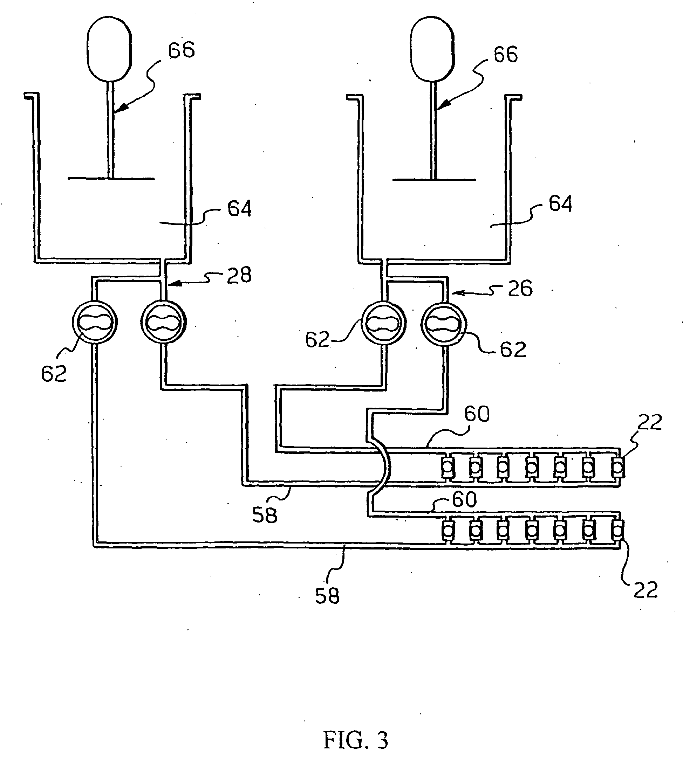

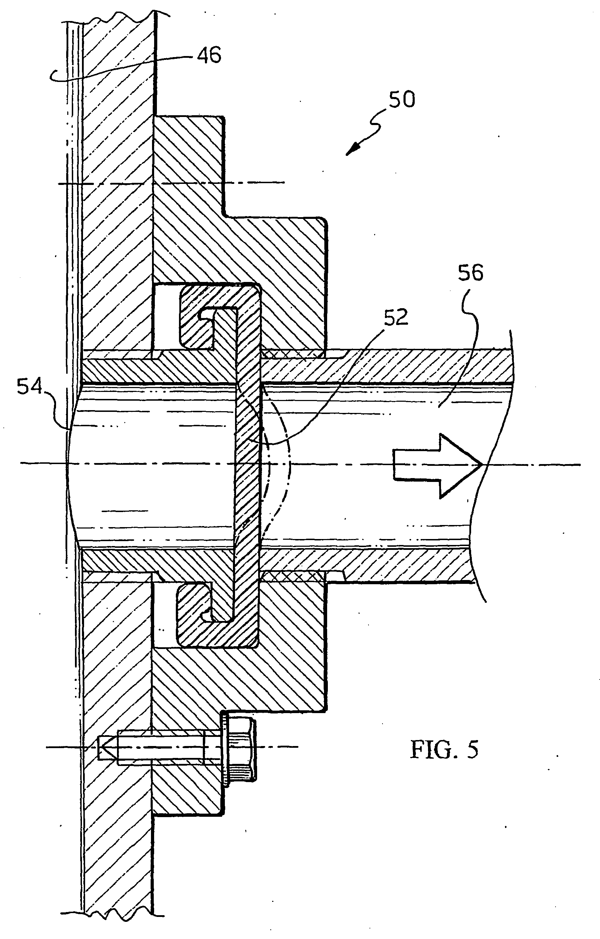

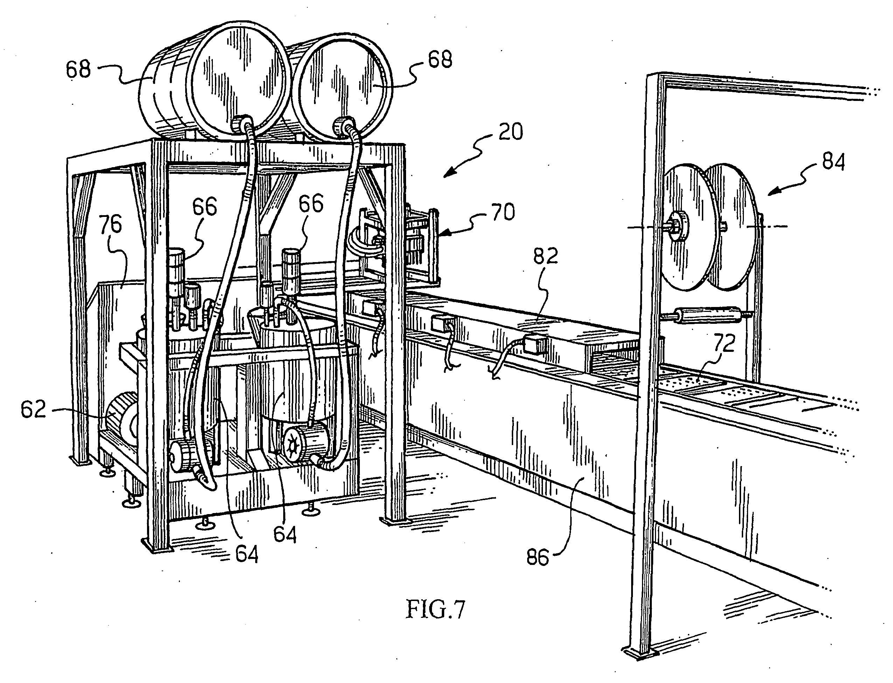

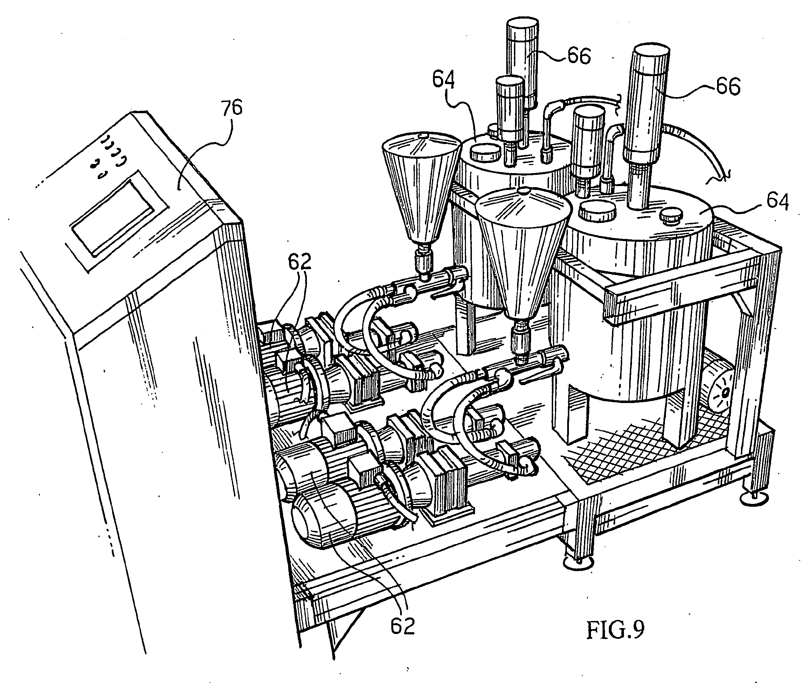

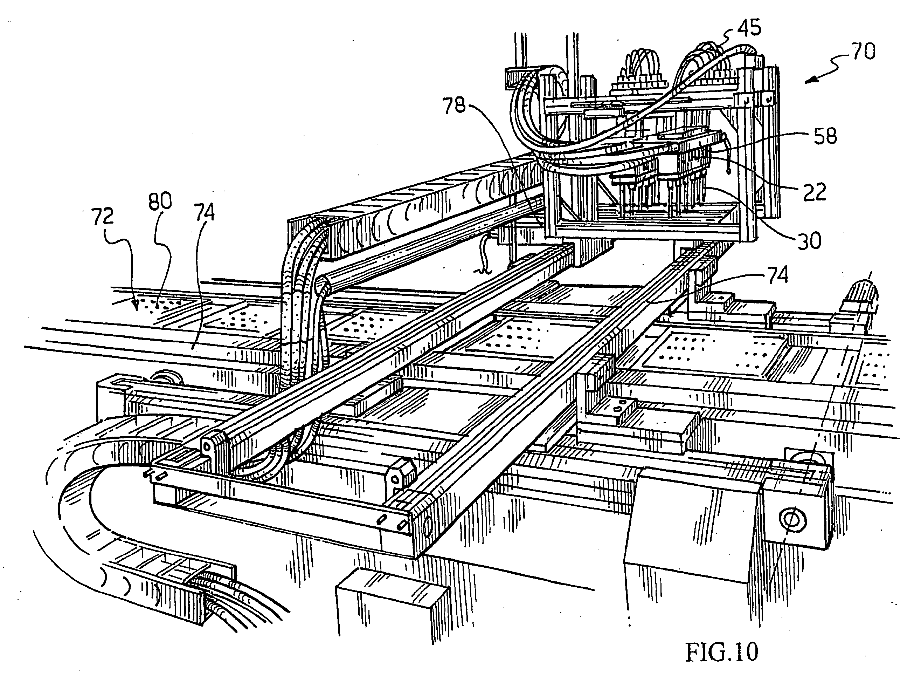

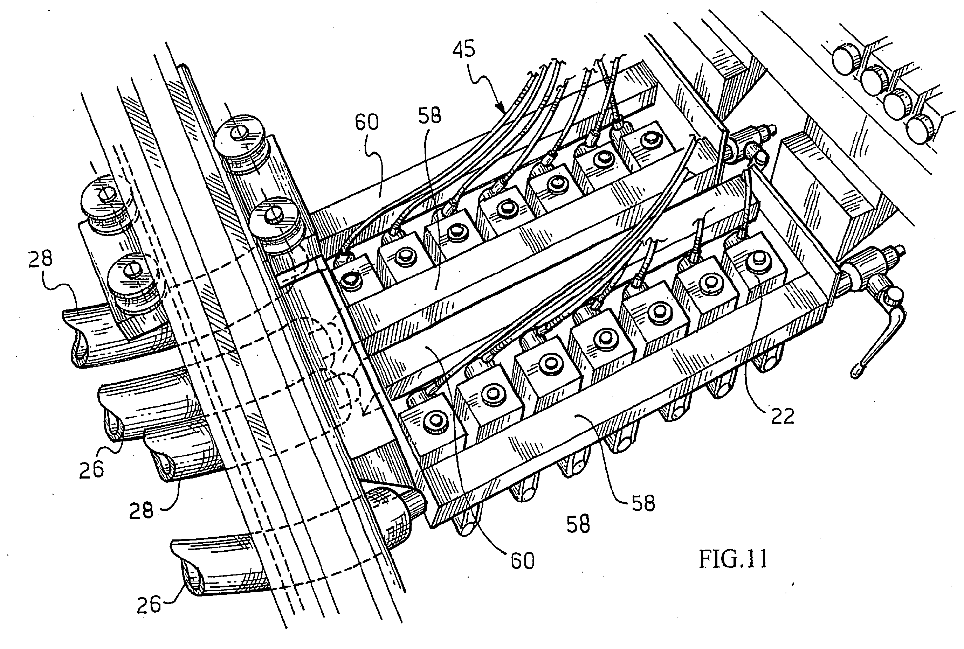

As shown in Figures 3 to 12, apparatus 20 for producing the wall and/or floor tile of the present invention comprises at least one supply head 22 suitable for depositing, in a container element 1 of a tile 10, a multi-component polymeric filling material 2 which is capable of setting after a predetermined period of time, at ambient temperature, upon the mixing of the multiple components. The supply head comprises injector means 24 provided with separate supply circuits 26 and 28 for each of the multiple components. The separate supply circuits 26 and 28 converge in a single nozzle 30 for mixing the multiple components, from which the filling material is supplied into the container element 1, in controlled manner, to form the wall and/or floor tile 10.

The apparatus 20 is suitable for supplying filling material into a container element 1 by means of a mixing nozzle 30 housed in a protective tube 32 comprising, at one end 32a, an opening which cooperates with a supply opening 30a of the nozzle and, at the opposite end, a ring nut 32b for fixing to a body 24a of the injector means 24.

The mixing nozzle 30 comprises a tubular body provided, at one end, with a supply opening 30a and, at an opposite end, with a receptacle 30b for collecting the multiple components emerging from the injector means 24 and conveying them into a mixing chamber 34.

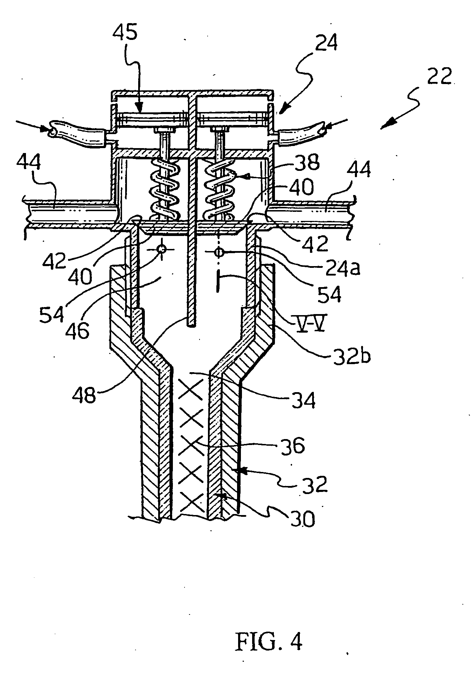

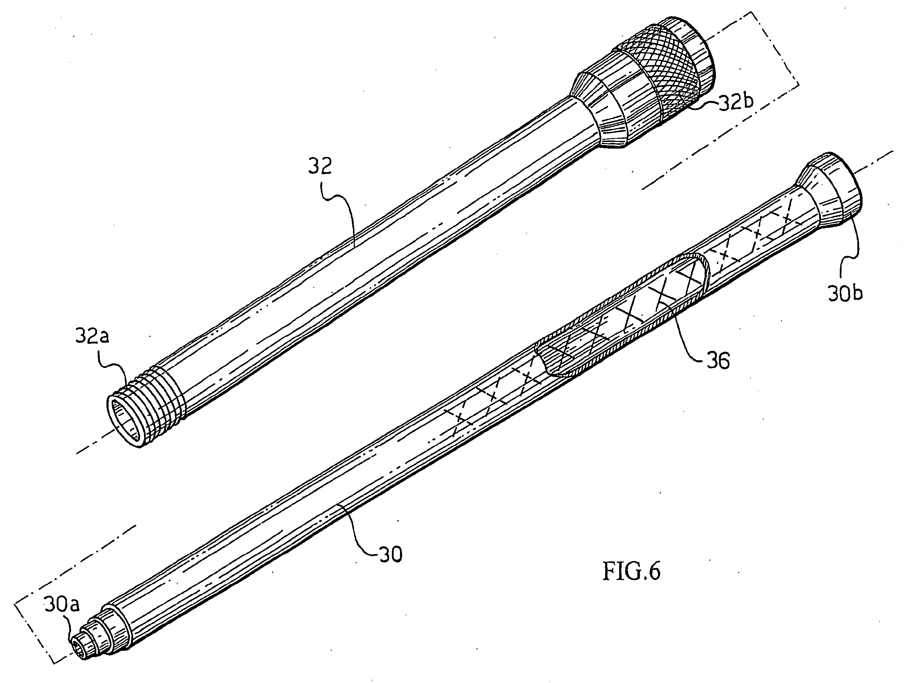

The mixing chamber 34 comprises obstacles 36, shown schematically in Figures 4 and 6, for facilitating contact and mixing of the multiple components forming the filling material.

According to one possible embodiment, the apparatus provides for the separate supply circuits 26 and 28 of the injector means 24 to be closed by valve means 38 which bring about controlled opening and/or closure of the circuit.

According to one possible embodiment, the valve means 38 comprise closure members 40 which are constantly urged into abutment against valve seats 42 to close flow apertures 44 for the multiple components of the circuits.

The closure members 40 can be opened pneumatically in controlled manner by pneumatic means 45.

According to one possible embodiment, the injector means 24 comprise an injection chamber 46, suitable for connection to the single mixing nozzle 30, and the separate supply circuits 26 and 28 converge in the chamber. Preferably, at least one partition 48 is provided in the injection chamber 46, and is disposed between outlets of the separate supply circuits 26 and 28, in a manner such that each component of the filling material comes into contact with another component only after reaching the nozzle 30.

According to a further possible embodiment of the apparatus, anti-drip means 50 are provided and comprise separate means for withdrawing, from the injection chamber, a predetermined quantity of each component which is not yet mixed, to prevent drips falling from the free opening of the nozzle.

Each of the anti-drip means 50 preferably comprises a diaphragm 52 which cooperates, in a leaktight manner, by means of a through-hole 54, with the injection chamber 46 and, on the opposite side, with a suction duct 56 suitable for creating a partial vacuum which, by deforming the diaphragm 52, draws the predetermined quantity of component which is not yet mixed, from the injection chamber 46.

In an advantageous embodiment of the apparatus, a plurality of supply heads 22 is provided (Figure 3). The plurality of supply heads 22 is preferably connected to supply manifolds 58 and 60 suitable for causing each of the components for forming the filling material to flow separately to each head 22.

According to a further embodiment, two pluralities of supply heads 22 are provided (Figure 3) and are arranged parallel to one another and a predetermined distance apart suitable for the deposition of filling material in two rows of container elements 1.

According to a further possible embodiment, the at least one supply head 22 is operatively connected to a plurality of separate supply ducts for each of the components for forming the filling material.

Moreover, each of the ducts may be heated, and each of the ducts may be heated to a temperature of between 20°C and 40°C, preferably 30°C.

According to one possible embodiment, each of the separate supply circuits 26 and 28 is operatively connected to a pump 62 which is controlled in a manner such as to supply the component which is to form the filling material to each component-supply head at a predetermined pressure.

Preferably, each separate supply circuit is supplied at a predetermined pressure which is independent of the others. For example, the supply circuit is supplied at a pressure of between 20 and 70 atmospheres, preferably between 30 and 50 atmospheres.

According to one possible embodiment, one component is supplied at 30 atmospheres and a second component is supplied at 50 atmospheres.

Moreover, the separate supply circuits 26 and 28 may advantageously be arranged to be supplied at respective pressures such that, if the various components are supplied for the same period of time, when mixed, they form the filling material which has a shore D hardness greater than 50, and which sets, at ambient temperature, within a time longer than 3 minutes.

According to one possible embodiment, a reservoir 64 suitable for holding each of the components of the filling material is operatively connected to each pump 62. A stirring device 66 may advantageously be associated with each reservoir.

Moreover, the reservoir may be heated, for example, to a temperature of between 20°C and 40°C and preferably to 30°C.

According to one possible embodiment, a further store 68 for each of the components suitable for forming the filling material may be provided, operatively connected to each of the separate supply circuits 26 and 28.

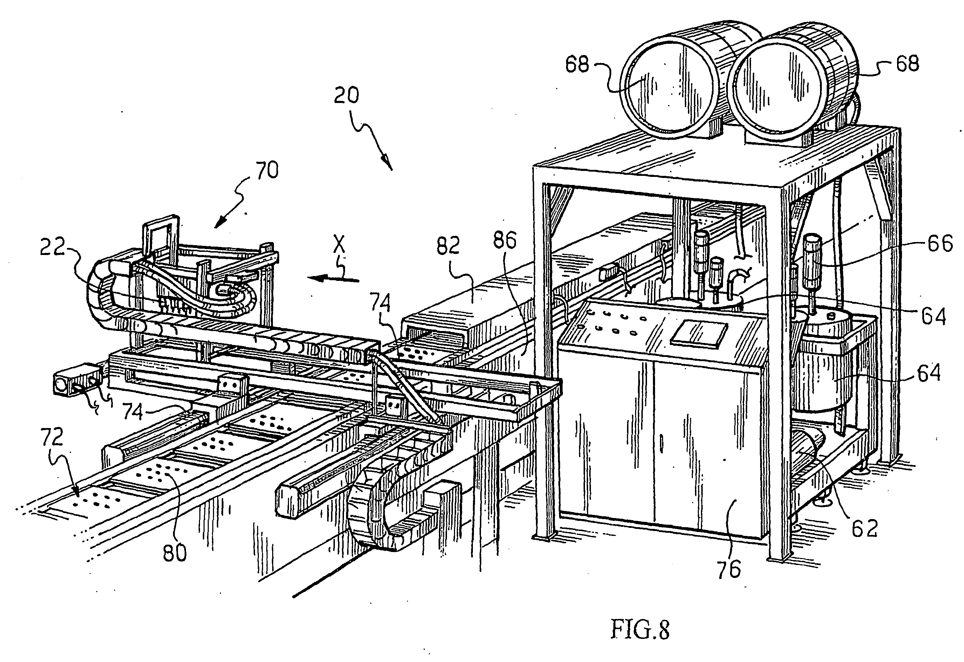

Advantageously, the at least one supply head 22 is associated with a movement carriage 70 (Figure 8) for bringing about controlled movement thereof. The carriage 70 is, for example, moved in controlled manner longitudinally relative to a conveyor line 72 of the container elements 1 which are arranged in a manner suitable for receiving the filling material 2 when it emerges form the nozzle 30. Moreover, the carriage is, for example, moved in controlled manner transversely relative to a conveyor line 72 of the container elements 1.

According to one possible embodiment, the carriage 70 is associated with sliding guides 74, preferably ball or roller guides.

Moreover, the carriage 70 may be operatively connected to actuators which are operated in controlled manner, preferably with position and/or velocity feedback.

According to one possible embodiment of the apparatus in question, each supply head 22 is operatively connected to a control unit 76 for bringing about controlled opening of the valve means 38. For example, the valve means 38 are opened for a period of time of between 0.3 and 150 msec.

Moreover, in one possible embodiment, in addition to working operations brought about in controlled manner, the carriage 70 adopts at least one rest position (Figure 8). An operative connection with a device for activating the discharge of material at predetermined time intervals may be provided in the rest position of the carriage so as to prevent setting of the material which is present in the mixing nozzle 30.

In a further embodiment of the apparatus, the carriage 70 has associated sensor means 78 for identifying the position of the carriage relative to a grating 80 for supporting and transporting at least one container element 1, the grating being disposed on a conveyor line 72 in a manner such that the nozzle is positioned so as to deposit the filling material 2 in the at least one container element 1.

Advantageously, a conveyor line 72 for at least one container element 1, which passes through an oven 82 suitable for accelerating the setting of the filling material, in series with positions for cooperation with the at least one supply head 22, may be provided.

More advantageously, a conveyor line 72 for at least one container element 1, which passes through positions in which the at least one container element 1 containing the filling material 2 cooperates with a device 84 suitable for depositing binding and reinforcing fabric on the rear of each tile 10, may be provided.

Optionally, a conveyor line 72 for at least one container element 1, which passes through positions in which it cooperates with a second oven for setting the filling material 2, is provided.

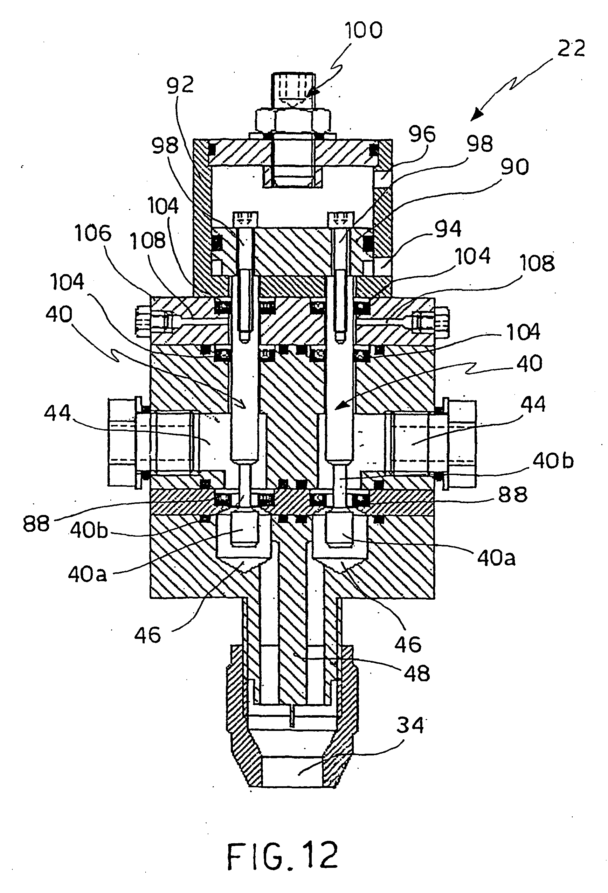

Figure 12 shows a further embodiment of the supply head 22 in which elements already described with reference to the embodiment of Figure 4 are indicated by the same reference numerals. In particular, the separate supply circuits 26 and 28 of the injector means 24 are arranged to be closed by the valve means 38 which bring about controlled opening and/or closure of the circuit.

According to the possible embodiment shown in Figure 12, the valve means 38 comprise closure members 40 formed by pistons which have diameters that vary along their longitudinal axes.

In fact, an end 40a of each piston has a larger diameter than an intermediate portion 40b of each piston. The end 40a constitutes the actual closure member which is intended to abut the respective valve seat 42 to close the flow apertures 44 for the multiple components of the circuits.

The valve seat 42 comprises sealing rings 88 with inside diameters such as to permit leaktight sliding of the larger-diameter end 40a and to leave an outlet aperture relative to the smaller-diameter intermediate portion 40b.

The injection chambers 46 are separated from one another as in Figure 4 and the two components are combined only at the end of the partition 48, as they emerge into the mixing chamber 34.

The valve means 38 are operated pneumatically, in controlled manner, both during opening and during closure, by pneumatic means 45. According to the embodiment of Figure 12, the pneumatic means 45 comprise a piston 90 fitted slidingly in a shell 92 provided with a first air-duct 94 and a second air-duct 96, which are arranged on opposite sides of the piston 90 and the functions of which are the admission and discharge of air under pressure, in dependence on the stage of operation of the head 22.

According to one possible embodiment, the piston 90 is connected to the rods of the pistons 40 by threaded connections 98.

According to one possible embodiment, the shell 92 also comprises means 100 for adjusting the stroke of the piston 90, the means 100 being constituted, for example, by an adjustment screw arranged in the base of the jacket 92.

In the embodiment of Figure 12, the anti-drip means are formed by means suitable for bringing about a withdrawal, from the injection chamber 46, of a predetermined quantity of each component which is not yet mixed, so as to prevent drips falling from the free opening of the nozzle.

These means comprise the adjustment means 100 and the configuration of the end 40a of the piston, as described below.

The position shown in Figure 12 corresponds to the flow of the components from the respective supply circuits 26 and 28 to the injection chamber 46. In fact, each component flows between the valve seats 42 and the intermediate portions 40b of the pistons. In order to close the valve means 38, air is admitted under pressure from the first duct 94 and urges the piston 90 upwards, lifting the two pistons 40.

The ends 40a of the pistons abut the respective sealing rings 88, closing the component-flow apertures. the stroke of the piston 90, and hence of the pistons 40, to continue, giving rise to sliding of the lateral walls of the end 40a against the internal walls of the sealing rings 88. The further upward movement of the end 40a brings about the withdrawal of material from the injection chamber 46, thus preventing dripping.

According to one possible embodiment, the head 22 may also comprise means 102 for checking the wear of sealing rings 104 fitted along the sliding seats of the rods of the pistons 40.

These checking means 102 comprise, for example, an element 106 inserted in the body of the head 22 and provided with through-holes which define a portion of the sliding seat of the pistons 40. Each piston sliding seat comprises two sealing rings 104, one disposed on the actual body of the head 22 and the other disposed on the element 106.

The element 106 also has two ducts 108 which are put into communication with the exterior and which open into respective piston sliding seats, between the two sealing rings 104. If the sealing ring 104 disposed closer to the component-flow apertures 44 wears, the component thus returns along the sliding seat of the respective piston and emerges to the exterior along the respective duct 108.

## Claims

1. A method of making a wall and/or floor tile (10) comprising a container element (1) and a filling material (2) disposed inside the container element, **characterized by** comprising a step of filling said container with the filling material (2) which is a polymeric material having a Shore D hardness greater than 50 and a setting time, at ambient temperature, of more than 3 minutes produced from a two-component material being a polyurethane by reaction of a polyol having a number of OH groups of between 80 and 500 mgKOH/g, and a viscosity of between 200 and 200,000 cps, with an isocyanate having an NCO content of between 5 and 31% or from a polyurea by reaction of an amine having a number of OH groups of between 500 and 1000 mgKOH/g with an isocyanate having an NCO content of between 5 and 15% wherein the polyols, isocyanates and amines are used as such without any additive, so that said filling material can adhere firmly to said container element without the interposition of a layer of gluing material.

2. A method according to claim 1 in which the filling material (2) has a Shore D hardness of between 55 and 85 and a setting time, at ambient temperature, of between 5 and 15 minutes.

3. A method according to Claim 1 or Claim 2 in which the filling material (2) has a Shore D hardness of 75 and a setting time, at ambient temperature, of 10 minutes.

4. A method according to Claim 1 in which the polyurethane is produced by reaction of a polyol having a number of OH groups of between 100 and 400 mgKOH/g, preferably 120 and 250 mgKOH/g, and a viscosity of between 2,000 and 10,000 cps, with an isocyanate having an NCO content of between 10 and 25%.

5. A method according to Claim 1 in which the polyurea is produced by reaction of an amine having a number of NH₂ groups of between 600 and 800 mgKOH/g with an isocyanate having an NCO content of between 7 and 10%.

6. A tile (10) obtainable by the method according to of any one of claims 1 to 5.

7. A tile (10) according to Claim 6 in which the container element (1) is in view.

8. A tile (10) according to any one of Claims 6 or 7 in which the container element (1) is completely filled with the filling material (2) so that the tile (10) has a flat surface (2a) of the filling material (2).

9. A tile (10) according to any one of Claims 6 to 8 in which the container element (1) is metallic.

10. A tile (10) according to Claim 9 in which the container element (1) is made of stainless steel.

## Patentansprüche

1. Verfahren zur Herstellung einer Wand- und/oder Bodenfliese (10) umfassend ein Behälterelement (1) und ein Füllmaterial (2), welches im Inneren des Behälterelementes angeordnet ist, **gekennzeichnet durch** das Umfassen eines Schrittes des Füllens des Behälters mit dem Füllmaterial (2), welches ein Polymermaterial ist, mit einer Shore D Härte von mehr als 50 und mit einer Absetzdauer bei Umgebungstemperatur von mehr als drei Minuten ist, hergestellt aus einem Zweikomponentenmaterial, welches ein Polyurethan ist, **durch** die Reaktion eines Polyols mit einer Anzahl von OH-Gruppen von zwischen 80 und 100 mgKOH/g, und einer Viskosität von zwischen 200 und 200.000 cps, mit einem Isozyanat mit einem NCO-Gehalt von zwischen 5 und 31 % oder aus einem Polyurea **durch** die Reaktion eines Amins mit einer Anzahl der OH-Gruppen von zwischen 500 und 1.000 mgKOH/g mit einem Isozyanat mit einem NCO-Gehalt von zwischen 5 und 15%, wobei die Polyole, Isozyanate und Amine als solche ohne Zusatzstoffe verwendet werden, so dass das Füllmaterial fest an dem Behälterelement haften kann, ohne die Einschaltung einer Schicht aus Klebematerial.

2. Verfahren nach Anspruch 1, wobei das Füllmaterial (2) eine Shore D Härte von zwischen 55 und 85 aufweist und eine Absetzdauer bei Umgebungstemperatur von zwischen 5 und 15 Minuten.

3. Verfahren nach Anspruch 1 oder Anspruch 2, wobei das Füllmaterial (2) eine Shore D Härte von 75 aufweist und eine Absetzdauer bei Umgebungstemperatur von 10 Minuten.

4. Verfahren nach Anspruch 1, wobei das Polyurethan hergestellt wird durch die Reaktion eines Polyols mit einer Anzahl von OH-Gruppen von zwischen 100 und 400 mgKOH/g, vorzugsweise 120 und 250 mgKOH/g und einer Viskosität von zwischen 2.000 und 10.000 CPS, mit einem Isozyanat mit einem NCO-Gehalt von zwischen 10 und 25%.

5. Verfahren nach Anspruch 1, wobei das Polyurea hergestellt wird durch die Reaktion eines Amins mit einer Anzahl an NH₂-Gruppen von zwischen 600 und 800 mgKOH/g mit einem Isozyanat mit einem NCO-Gehalt von zwischen 7 und 10%.

6. Fliese (10) erhältlich durch das Verfahren gemäß einem der Ansprüche 1 bis 5.

7. Fliese (10) nach Anspruch 6, wobei das Behälterelement (1) sichtbar ist.

8. Fliese (10) nach einem der Ansprüche 6 oder 7, wobei das Behälterelement (1) vollständig mit dem Füllmaterial (2) gefüllt ist, so dass die Fliese (10) eine flache Oberfläche (2a) des Füllmaterials (2) aufweist.

9. Fliese (10) nach einem der Ansprüche 6 bis 8, wobei das Behälterelement (1) metallisch ist.

10. Fliese 10 nach Anspruch 9, wobei das Behälterelement (1) aus rostfreiem Stahl besteht.

## Revendications

1. Procédé de réalisation d'un carreau (10) de mur et/ou de sol comportant un élément d'enveloppement (1) et une matière de remplissage (2) disposée à l'intérieur de l'élément d'enveloppement, **caractérisé en ce qu'**il comprend une étape de remplissage de ladite enveloppe avec la matière de remplissage (2) qui est une matière polymérique ayant une dureté Shore D supérieure à 50 et un temps de prise, à la température ambiante, de plus de 3 minutes, produite à partir d'une matière à deux constituants qui est un polyuréthanne par réaction d'un polyol ayant un nombre de groupes OH compris entre 80 et 500 mgKOH/g, et une viscosité comprise entre 200 et 200 000 cPs, avec un isocyanate ayant une teneur en NCO comprise entre 5 et 31 % ou à partir d'une polyurée par réaction d'une amine ayant un nombre de groupes OH compris entre 500 et 1000 mgKOH/g avec un isocyanate ayant une teneur en NCO comprise entre 5 et 15 %, les polyols, isocyanates et amines étant utilisés en tant que tels sans additif quelconque, afin que ladite matière de remplissage puisse adhérer fermement audit élément formant enveloppe sans l'interposition d'une couche de matière de collage.

2. Procédé selon la revendication 1, dans lequel la matière de remplissage (2) a une dureté Shore D comprise entre 55 et 85 et un temps de prise, à la température ambiante, compris entre 5 et 15 minutes.

3. Procédé selon la revendication 1 ou la revendication 2, dans lequel la matière de remplissage (2) a une dureté Shore D de 75 et un temps de prise, à la température ambiante, de 10 minutes.

4. Procédé selon la revendication 1, dans lequel le polyuréthanne est produit par réaction d'un polyol ayant un nombre de groupes OH compris entre 100 et 400 mgKOH/g, avantageusement 120 et 250 mgKOH/g, et une viscosité comprise entre 2000 et 10 000 cPs, avec un isocyanate ayant une teneur en NCO comprise entre 10 et 25 %.

5. Procédé selon la revendication 1, dans lequel la polyurée est produite par réaction d'une amine ayant un nombre de groupes NH₂ compris entre 600 et 800 mgKOH/g avec un isocyanate ayant une teneur en NCO comprise entre 7 et 10 %.

6. Carreau (10) pouvant être obtenu par le procédé selon l'une quelconque des revendications 1 à 5.

7. Carreau (10) selon la revendication 6, dans lequel l'élément formant enveloppe (1) est en vue.

8. Carreau (10) selon l'une des revendications 6 et 7, dans lequel l'élément formant enveloppe (1) est complètement rempli de la matière de remplissage (2) afin que le carreau (10) ait une surface plate (2a) de la matière de remplissage (2).

9. Carreau (10) selon l'une quelconque des revendications 6 à 8, dans lequel l'élément formant enveloppe (1) est métallique.

10. Carreau (10) selon la revendication 9, dans lequel l'élément formant enveloppe (1) est réalisé en acier inoxydable.
